# EUROPEAN PATENT APPLICATION

(11) **EP 1 434 033 A2**
(43) Date of publication of application: **30.06.2004**
(21) Application number: 03258173.8
(22) Date of filing: 24.12.2003
(51) Int. Cl.: G01C 21/20, G01C 21/26

(54) **Portable promenade navigation device**

(30) Priority: 27.12.2002 JP 2002380142
(71) Applicant: Yugen Kaisha Verk Japan, Yokohama-shi, Kanagawa-ken (JP)
(72) Inventor: Yamazaki, Toshio, c/o Yugen K. Verk Japan, Yokohama-shi, Kanagawa-ken (JP)
(74) Representative: Parnham, Kevin

(57) **Abstract**

A portable promenade navigation device which can set promenade route by combining route segments into a route depending on the selection by a user. The segments are associated with respective sounds and images which are reproduced by audio means and displayed display means on the navigation device. The device comprises a map data memory for storing maps; a data base for storing image information and sound information regarding facilities and/or scenarios associated with respective nodes and route segments on the maps; a display means for retrieving a map around the present position of the navigation device from the map data memory and displaying the map on a screen; a reproducing means for reproducing a sound; a setting means for setting a route at the request of the user of the navigation device; and a means for retrieving portions of said image information and/or the sound information associated with the node and the route segment on the set route corresponding to the present position of the navigation device, and displaying the retrieved image on the screen and/or reproducing the retrieved sound by the reproducing device.

## Description

### [Technical field of the invention]

The present invention relates to a portable promenade navigation device which can be carried by a user.

### [Prior art]

Portable devices such as cell phones, PDAs or other devices were commercialized which display maps on a screen to show a routing to a destination or reproduce audio guidance or other sound in response to imputing selected one of numerals assigned to specific spots in each of respective locations such as museums, other facilities or outdoor places.

JP 11-328217 A can be cited as a prior publication on this subject.

Among them, the former device for displaying maps on a screen is based on the commercialized car navigation principle and displays a map at a desired scale around the current position of the user of the device along the shortest length of route to the destination set by the user. This device is very convenient but is restricted to the route guidance and cannot indicate various information or scenarios along the selected route on demand of the user.
In the latter case, the user has to push a button to input selected numerals at predetermined locations by looking at the indicated numerals. This operation is cumbersome and cannot satisfy such pleasures as free walking, promenade in towns, nature investigation or the like.

Further, there have been proposed a system which provides images as well as explanations at predetermined spots along a particular route (For example, the currently available car navigation device is able to automatically display facilities near the routes). However, only the provision of single information along the route is monotonic and not very attractive.

Accordingly, it is an object of the present invention to provide a more valuable promenade navigation device which can be used more naturally for viewing landscapes and scenic beauties while walking. The present invention aims at providing a navigation system which is suited for free walking, town promenade, nature visiting and is operated on scenarios based on spacial movement between recommended spots of land. That is, the object of the invention is to provide a navigation device which can provide not only routings according to predetermined scenarios, but also any routings according to free selection or to recommendation by experts, so that information in accordance with the purpose of observation or appreciation is displayed as image information together with sound information (voices and music) with possible added direction according to user's interests or choices, conforming to the present position (coordinate) of user with a right timing.

Another object of the present invention is to timely provide concrete information (voices and/or music) and images regarding delved contents of facilities, goods, services, background or histories of spots along the route, if required by the user.
A further object of the present invention is to provide a promenade navigation device which provides opportunities of data production to many people who are interested in the routes and spots on land and utilizes thusly produced data.

### [Summary of the invention]

The present invention provides a portable promenade navigation device comprising:
a map data memory for storing maps;
a data base for storing image information and sound information regarding facilities and/or scenarios associated with respective nodes and route segments on the maps;
a display means for retrieving a map around the present position of the navigation device from the map data memory and displaying the map on a screen;
a reproducing means for reproducing a sound;
a setting means for setting a route at the request of the user of the navigation device; and
a means for retrieving portions of said image information and/or the sound information associated with the node and the route segment on the set route corresponding to the present position of the navigation device, and displaying the retrieved image on the screen and/or reproducing the retrieved sound by the reproducing device.

Preferably, the setting means includes a means for selecting a plurality of positions on the map displayed on the screen and set the route including the selected positions.
Preferably, the device further comprises a means for checking whether the present position of the navigator device is on the set route and a means for setting anew the route starting from the present position of the navigation device to the destination if the present position is not on the set route.

Preferably, the image information and sound information are classified and the navigation device further comprises a means for selecting a class from said data base so as to display an image on the screen or reproducing a sound by the reproducing means, corresponding to the selected class on demand of the user carrying the navigation device. As will be explained later, systematic explanations on the facilities, historical locations, or other creative explanation regarding literary or other arts are classified beforehand and the user may designate a class to retrieve a specified type of information on historical space promenade, literary promenade, or shopping promenade.

The map in said map data memory and/or the image information and sound information in said data base may be downloaded from a host server, so as to renew the information.
Further, the device may include a means for detecting the current position and the direction of movement of the device and means for reproducing sequentially the image and/or the sound associated with the nodes and route segments of the current position.
In addition, the scenarios may contain predetermined scenarios along a plurality of routes and said setting means contains a means for setting a route corresponding one of the predetermined scenarios.

### [Functions]

According to the present invention, map information is first displayed on a crystal liquid screen for such purposes as historical site promenade, street walking, architecture or art promenade, shopping and the like, a scenario is selected from a user's input terminal of the portable device and a route based on the selected scenario is set and indicated on the map image displayed on the screen. Alternatively, a route is set by pointing with an input tool a desired walking route, or desired starting and terminating points for walking, or three or more points through which a route is to be set on the map displayed on the screen. By so doing, the navigation device automatically synthesizes voice explanations, songs, music and/or images on facilities, historical sites or lands stored beforehand in the data base for respective segments of the set route and sequentially displays by the image displaying means and/or sequentially reproduces them by the sound reproducing means in response to the detection of the current positional information obtained from GPS or similar means.

In this case, the types (classified ones) of information to be displayed and/or reproduced may be selected by the user. For example, stored information of images and sounds may be classified into several types and one or more of them be selected and combined, thereby a desired combination of these types may be utilized at will. For example, images and explanations on a historical site of a certain historical era may be utilized as one mode of utilization while guidance on a historical site in combination with literal arts or architectures may be utilized as another mode of utilization.
Thus, the according to the present invention, an added value promenade navigation is made available along an arbitrarily selected route.

The above-mentioned word "scenario" means an objective or directive expression made by an author in regard to facility, spot or route for each of the respective route segments corresponding to varying positional coordinate and/or lapse of time. This expression is mainly composed of sounds (voices and music) and if desired images. The scenario is given to and cognized by the user together with landscape and atmosphere actually seen and experienced at site from the current position of the user in order to deepen the user's knowledge and help construct a higher level of movement by generating a new feeling harmonized with the atmosphere uniquely formed at site. Such scenarios are produced by authors by using audio input means and/or photographic means and/or video imaging means, in combination with the position, route and time and are then transmitted to a data base for use by other users via communication means.

### [Modes of working the invention]

Fig. 1 shows a schematic view of the promenade navigation system of the present invention.
Fig. 2 is a flow diagram showing one example of operation of the navigation system according to the present invention.
Fig. 3 is a flow diagram showing another example of operation of the navigation system according to the present invention.

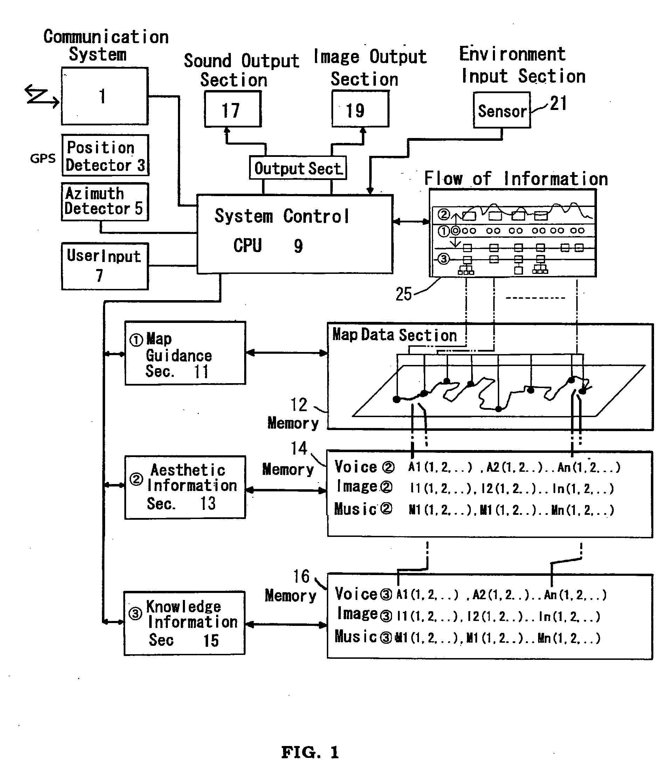

Fig. 1 illustrates a basic construction of the portable promenade navigation device in which a guide model 25 is shown.
In this figure, information required for the promenade navigation device according to the present invention may be downloaded via wireless or cable communication system 1. Such information comprises map information, sound information and image information on facilities, histories or the like associated with the route.

Further, the device is provided with a position detector 3 such as GPS for detecting the current position of the device and azimuth detector 5 for determining the orientation of the walking user. As well known in car navigation, the current position and orientation of a car are constantly measured by position detector such as global positioning system (GPS) and orientation detector such as gyroscope. Also known are a number of antennas installed along roads to form a wireless LAN or infrared communication or bluetooth which notifies cell phones of their positions. Accordingly, the portable promenade navigation device of the present invention (such as portable terminal PDA or portable cell phone provided with a crystal display device and a audio reproducing device) uses these techniques and detailed explanation is omitted here. For example, the position detector may be a GPS and the orientation detector of the user may be a map matching device provided with a lapse time clock (to determine which of two positions was passed earlier than the other).

The device comprises a central processor (CPU) 9 provided with system control, synthesis and output composing functions. The CPU 9 performs all necessary control for the present invention as well as other controls. The CPU 9 makes access to contents provider(s) via a communication system 1 (for example, PHS antenna is used in wireless LAN) and downloads a map data from map data base of the provider for renewal, sounds (voices and music) and images associated with route segments along all of the routs on the map from aesthetic information data base and from knowledge information data base for renewal, and stores them respectively in a map data memory 12, an aesthetic information data memory 14 and a knowledge information memory 16.

The map data memory 12 stores digital information but for the sake of easy understanding the relation between the data are depicted as a map in the drawing. This map information may be displayed on the screen of the navigation device as a perspective view with a desired reduced scale and a bird-eye view angle, together with route guidance voices as well known in the conventional car navigation system.

The aesthetic information data memory 14 stores creative information such as expression of personal feeling or affectivity regarding literature, poems, travelogue, paintings, sculptures, architectures or the like associated with nodes and segments of the routes. For example, a relatively long or short images or others which are appropriate for promenade navigation. With a scenario for long hours of walking along a route, voices and music may be provided as congruous story or stories with systematic interpretation. This type of information, which are creative original information (unique explanations or personal commentaries on specific facilities, scenes or brush works), may preferably be inputted and stored in the data base of the contents provider by professionals, amateurs or general public who have free access to the data base, along the spots or segments along the route, and may be freely retrieved by the promenade navigation device.

The knowledge information data memory 16 is a memory which primarily systematically stores objective descriptions on the sciences, technologies, histories, geographies, facilities, shops and others. This information contains relatively short images and the like. This systematic information (for example, explanation of latest services provided by commercial or sight-seeing facilities) may preferably be inputted and stored in the data base of the provider. By the term "systematic" is meant a description of concrete knowledge which is obtainable using a hierarchy structure. For example, the hierarchy structure for a shop consists of towns>names of famous department stores>generic classes for the goods>respective goods belonging to each of the classes. Using the searching function of the navigation device, memory of a deeper (more specific) hierarchy is searched and accessed. Such a technique is disclosed in JP 11-328217 A, which is incorporated herein by reference.

These knowledge memories 14 and 16 are conveniently used by selecting the classified information. Another or other types of data memories may also be used or these memories 14, 16 and may contain further lower hierarchy classes. For example, the knowledge information data memory 16 may contain subclasses such as science, history, geographic area and shopping and the user may store them in the memory 16 and select the subclass "shopping" among them for example.

According to the present invention, the aesthetic information data memory 14 is divided into memories for voices A1, A2, ..., An (each contains one or more pieces of voice information), images I1, I2, ...,In (each contains one or more pieces of image information) and pieces of music M1, M2...,Mn (each contains one or more pieces of music), corresponding respectively to respective route segments 1, 2, ...n of a route. (In this example, sound information contains voice information and music information), Each of the scenarios does not contain lower classes and scenario corresponding to each segment is single.

Similarly, the knowledge information data memory 16 is divided into memories for voices A1, A2, ..., An (each contains one or more pieces of voice information), images I1, I2, ...,In (each contains one or more pieces of image information) and pieces of music M1, M2...,Mn (each contains one or more pieces of music), corresponding respectively to respective route segments 1, 2, ...n of a route.
The pieces of information may be classified down to lower finer classes. For example, the voice A1 is classified downwards from the top as A-1, A1-2, A1-3...down to any deepest class. Such hierarchy is known (JP 11-328217 A).

A map routing guide portion 11 controls readout of the map information from the map data base memory 12 and performs other functions required for navigation. For example, the navigation device contains such functions as the least time route searching or the shortest distance route searching, displaying functions of these routes, voice guidance, etc, which are conventionally employed.

The CPU 9 for system control, synthesis and output composition is used to control the operation of the device of the present invention. First of all, the CPU 9 downloads the information through the communication system 1 and distributes the information via input and output control circuits 11, 13 and 15 to the memories 12, 14 and 16, respectively, to renew these memories. If the promenade navigation device has the latest information, the downloading is not necessary.

The CPU 9 determines the current position of the device using the position detector 3 utilizing a GPS and the orientation using the azimuth detector 5 and displays a map on an image output or display section 19.

The CPU 9 sets a route based on the route setting condition inputted from the user's input section 7 to set, for example, a route for a history guidance scenario provided by a route guidance professional which is desired by the user, or a route passing through designated points, which are the starting point, terminating point and one or more intermediated points inputted by the user, and indicates the route on the screen of the image output section 19 on which a map image has been displayed. This route is composed of a plurality of nodes (crossing points) and route segments. As previously mentioned, the contents of the memories 14 and 16 are stored in such manner that they are assigned to the nodes and route segments. Incidentally, an environment input section 21 may be used for sensing and inputting images around the device at the time of inputting scenario as will be explained later. Another example of this environment input section may obtain through a sensor a map coordinate of the facility, internal structure, brief summary of exhibition in the facility by sensing bar code indicated at the entrance of the facility.

The route thusly set is a fixed route but if the user desires a free promenade the current position may be detected from moment to moment and, if the device is deviated from the set route, a new route to the destination may be reset by designating the current position as the starting point or a new route to return the user to the route defined by a scenario may be set.

The CPU 9 determines whether the current position is on the route when the user selects the guide start from the user input section 7 and if it determined negative a message to that effect is indicated on the image output section 19. On the other hand, if the user is on the route, his current position is indicated on the display device 19. At the same time the CPU readouts indices of information from the aesthetic information section 13 and/or knowledge information section 15 and indicates the indices as a menu on the screen of the image output section 19. Similar operation is continuously repeated along the route as shown in the block 25 in Fig. 1 (the block 25 is not a part of the device but shows a flow of information). This sequence may be partly reversed because the information is grouped for each of the route segments.

In order to reproduce the information in conformity with the movement and orientation of the user of the promenade device it is necessary to sequentially reproduce the information in the direction of the route. This is done by detecting the current position and the direction of the movement of the user and reproducing the information associated with the nearest node or the route segment in the direction of the movement.

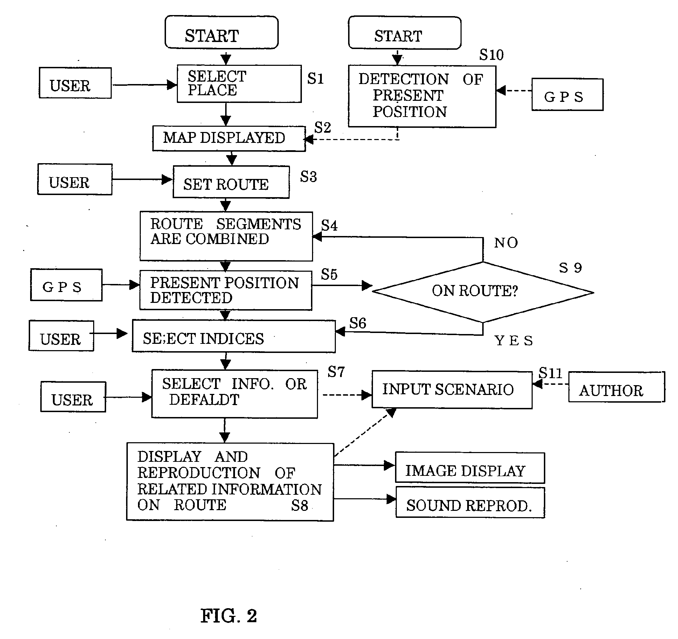

Figs. 2-3 shows examples of the usage of the present device but it should be noted that the method of utilization is not restricted to these examples.

### Example 1

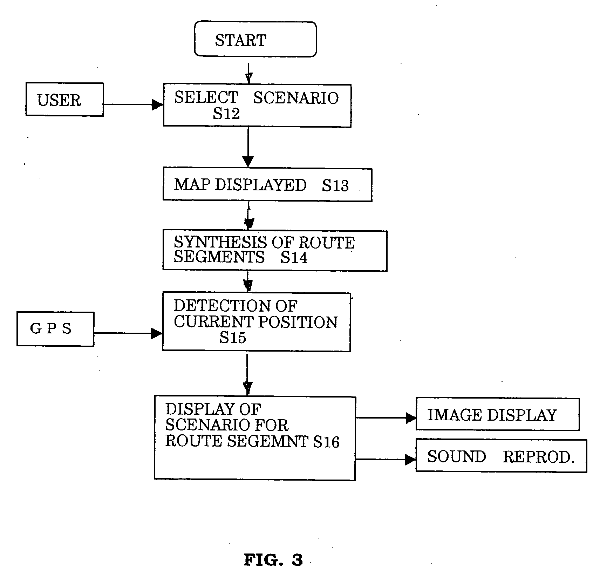

The user selects one of the process flows indicated by solid line and dotted line in Fig. 1 from the menu image of the portable promenade navigation device. Alternatively, the user may select the flow shown in Fig. 3 which will be explained as Example 3.

In Fig. 2, the user first inputs the name of a place, name of a facility, or name of a historical site (S1) to display on the display device a map around the place, etc. which the user desires to see (S2), Alternatively, if the user is on a desired spot, he may select automatic mode along the dotted line to display a map around the user (S10) using GPS. Then, the user inputs names of desired starting and terminal points or further one or more intermediate points by, for example, pointing the positions on the image output section (display device) 19 (S3). If two or three positions are designated and if two or more routes are present, a preferential selection circuit may be used to automatically select the most popular route or a route containing route segments which have the most abundant aesthetic or knowledge information in the aesthetic information or knowledge information data base. Thus, the CPU 9 sets a route which is a sequential combination of route segments 1, 2, ..., n (S4). This set route is simply a sequential connection of nodes and route segments and the information is depending from each nodes and segments of the route. Accordingly, it is not necessary to synthesize the data beforehand but is sufficient to read out and display the information from the data bases 12, 14 and 16 associated with each route segment associated with the current position of the navigation device.

When the user stands at the staring point or any other point on the set route, the current position of the navigation device is detected from moment to moment by the position detector 3 using GPS or the like and the orientation detector 5 (S5). The current position so detected is checked as to whether it is on the set route (S9). If it is yes, the CPU 9 indicates indices of the contents of the data base memories 14 and 16 corresponding to the current route segment on the display device 19 (S6). The user selects desired one from the indices (If it is knowledge information, the tree-like hierarchy of classes is searched by sequentially clicking down by a pointer to a desired class) or does nothing (default) (S7). In response to the selection by the user, explanations and/or pieces of music are reproduced by the sound output section 17 and images are displayed by the image output section 19 (S8).

On the other hand, if the result of the checking (S9) is that the current position of the device is out of the set route and if the route is not fixed the route setting is performed again from the current position (S4). This loop (the portion including S9) is for free promenade.

As another option, the user may be a writer as mentioned in the foregoing and input a scenario. This can be done when the route setting reached the stage S7, the mode is switched to sound and/or image input mode (going to S11 from S7) instead of going to the stage S8; or when the sound scenario alone is inputted the mode is switched from the sound input mode while the image is being reproduced (S8 and S11).

### Example 2

This is an example of materializing promenade navigation based on ready-made scenarios. One of scenarios is selected from among a number of scenarios stored in the date base which have been prepared by professional scenario writers. For example, such scenarios may contain history guidances along specific routes created by respective authors. Accordingly, the scenarios and the routes correspond to each other and thus scenarios may be used for setting routes instead of using routes.

In Fig. 3, a scenario selection menu is displayed on the display device 19. This menu lists scenarios and the user selects a name of scenario in the menu by means of the input 7 (S12) which in turn indicates a map associated with the selected scenario on the display (S13). The scenario has its corresponding route and accordingly the CPU 9 generates a route by combining route segments 1, 2, ..., n (S14). This set route is simply a sequential arrangement of nodes and route segments, and the respective parts of the selected scenario are suspended from the corresponding route segments, although the route is determined by the scenario. Accordingly, it is sufficient to read out the map information from the map data memory 12 belonging to the present route section.

When the user stands on the starting point or any other position on the set route, the present position is detected from moment to moment by the position detector 3 using the GPS and the orientation detector 5 (S15). Since the current position corresponds to a particular route segment the CPU 9 reads out the portion of the selected ready-made scenario corresponding to the node and route segment from the aesthetic information data memory 14 and reproduces the portion as sounds (voices and pieces of music) and images by the sound output section 17 and image output section 19 (S16).

### [Effects of the invention]

From the foregoing, the promenade navigations device according to the present invention, history promenade, historical site promenade, town street walking or natural environment of resort sites can be freely enjoyed depending on personal preference and selection along an arbitrarily set route with explanations and images. Since there are many choices, nurturing of personal knowledge or aesthetic sentiment of interest is attainable. Also, it is possible to create new fields of arts or give birth to new types of scenario writers.

## Claims

1. A portable promenade navigation device comprising:
a map data memory for storing maps;
a data base for storing image information and sound information regarding facilities and/or scenarios associated with respective nodes and route segments on the maps;
a display means for retrieving a map around the present position of the navigation device from the map data memory and displaying the map on a screen;
a reproducing means for reproducing a sound;
a setting means for setting a route at the request of the user of the navigation device; and
a means for retrieving portions of said image information and/or the sound information associated with the node and the route segment on the set route corresponding to the present position of the navigation device, and displaying the retrieved image on the screen and/or reproducing the retrieved sound by the reproducing device.

2. A portable promenade navigation device according to claim 1, wherein said setting means includes a means for selecting a plurality of positions on the map and set the route including the selected positions.

3. A portable promenade navigation device according to claim 1 or 2, wherein the device further comprises a means for checking whether the present position of the navigator device is on the set route and a means for setting anew the route starting from the present position of the navigation device to the destination if the present position is not on the set route.

4. A portable promenade navigation device according to any one of Claims 1-3 wherein said image information and sound information are classified and said navigation device further comprises a means for selecting a class from said data base so as to display image(s) on the screen or reproducing sound(s) by the reproducing means corresponding to the selected class on demand of the user carrying the navigation device.

5. A portable promenade navigation device according to any one of Claims 1-4, wherein said the map in said map data memory and/or the image information and sound information in said data base is downloaded from a host server.

6. A portable promenade navigation device according to any one of Claims 1-5, wherein said device further includes a means for detecting the current position and the direction of movement of the device, and means for reproducing sequentially the image and/or the sound associated with the nodes and route segments of the current position and the direction.

7. A portable promenade navigation device according to Claims 1, wherein said scenarios contain predetermined scenarios along a plurality of routes and said setting means contains a means for setting a route corresponding one of the predetermined scenarios.
